# EUROPEAN PATENT APPLICATION

(11) **EP 1 637 957 A1**
(43) Date of publication of application: **22.03.2006**
(21) Application number: 04022374.5
(22) Date of filing: 21.09.2004
(51) Int. Cl.: G06F 1/00, G11B 23/30, G06K 19/07

(54) **Method and apparatus for accessing protected data**

(71) Applicant: DEUTSCHE THOMSON-BRANDT GMBH, 78048 Villingen-Schwenningen (DE)
(72) Inventor: Adolph, Dirk, 30952 Ronnenberg (DE); Schewzow, Andrej, 30163 Hannover (DE); Winter, Marco, 30173 Hannover (DE)
(74) Representative: Hartnack, Wolfgang

(57) **Abstract**

Consumers of content protected multimedia data, such as e.g. commercially available video DVDs, want to take backup copies of these data, and want to be free to play the data on any suitable playback device, while content providers want to protect these data against pirate copying. The disclosed method for accessing application data from a first storage medium (MC), e.g. CD, uses an electronic key for decoding or converting the application data. One or more content identifiers are attached to the application data or the first storage medium (MC). The key is stored on a copy-protected separate second storage medium, e.g. RFID tag, and compared with the content identifier. Playback or format conversion of the application data is only possible when the second storage medium (MID) is available. This allows the application data to be copied, distributed or format converted, while simultaneously preserving the content rights of the data because only one copy can be used at a time.

## Description

### Field of the invention

This invention relates to a method and apparatus for accessing protected data. In particular, the invention relates to a method and apparatus for accessing copyright protected data retrieved from a storage medium.

### Background

Commercially available multimedia data are protected by copyrights. The owners, music and video production industry as well as artists, are strongly interested in preventing pirate copying of media like CDs, DVDs, Blu-ray Discs and other media carrier like Flash-chips etc. A rigorous approach of preventing the copying of media by techniques that generally prohibit copying arouses hard criticism by the consumers, because some player devices may not be able to read such protected discs. Another issue that consumers continue to bring forward is the missing possibility of creating backup copies for personal use.

It is therefore desirable to have a solution for allowing e.g. a DVD being copied by a consumer for personal purpose, but simultaneously preserving the copyright of the content owner.

One known solution is the "burst cutting area", a type of barcode that can be read by a pickup and is written into a special sector on DVD-ROM discs. The writing of the burst cutting area during production of the disc is done for each disc separately within an individual processing step. This processing step however increases production costs and also excludes that a consumer may take a copy of the disc, even if it is for private use.

Another solution exists for writable media carriers, which can be written completely or in parts. These writable media carriers are able to hold a 'counter' field reflecting the count of copies allowed for the consumer. The 'counter' field value is read, decremented and re-written whenever a copy is generated. If the value reaches zero, further copy processes are denied. The counter field being zero means that all allowed copies have been consumed. This solution however is not applicable for read-only media, since it requires a writable area on the media carrier itself, e.g. a DVD-R/DVD-ROM combination. Furthermore, the player must be able to change the counter field by writing into this area.

A further solution is a special player that has a local 'count' value stored and thus may limit the number of copies. This however is quite insecure because it covers only the copies that the particular player generates.

Other known methods for content protection, e.g. used for pay-TV, employ user specific keys, which means additional administrational effort for providers to maintain individual keys for their customers, or even device specific keys. Further, a customer may want to sell, lend out or give away as a present e.g. a DVD or a Blu-ray disc on a private basis, which is not possible when the content is only accessible with a user specific key.

### Summary of the Invention

The present invention solves the mentioned problem of allowing data from a data storage medium to be copied, while simultaneously preserving the content rights of the data. Therefore, the invention prevents unauthorized usage of the data, e.g. multimedia data such as audio, video or program data. In particular, the invention discloses a way to protect data with an electronic key, wherein the data may be easily copied but the key is very difficult to copy. Further the invention solves the problem of allowing playback of copyright protected content on different devices.

The invention uses a 'media identifier' that is stored on a tag being associated with but disjointed from the 'media carrier', i.e. the data to be protected and the corresponding identifier are stored on separate different storage media. The media identifier is at least difficult to copy, or cannot at all be copied using commercially available devices. The media identifier tag is preferably a passive device.

According to the invention, the method for accessing first data retrieved from a first storage medium includes the steps of
retrieving through a first interface first data from the first storage medium, the first data containing first content identification data and first application data, providing through a second interface power to a removable passive device, the device containing a second storage medium,
receiving through the second interface first key identification data from the second storage medium on the removable device,
comparing first content identification data and first key identification data, and generating an indication if both are equal, and
upon said indication enabling further processing of the first application data, or disabling further processing of the first application data otherwise.

A device capable of decoding the content of the media carrier, e.g. for playback, allows decoding of the data only if the media identifier is connected to it. It must read the media identifier before or while it may decode the data from the media carrier. The device may also playback the data content from a copy of the media carrier when the media identifier is available. Thus, the usage of the content becomes independent from the physical media carrier, and the usage of the actual content is protected rather than the physical data.

The user is allowed to make any number of copies and use a copy wherever he likes, as long as he provides the media identifier belonging to the media carrier. In order to prevent copying of the media identifier, it is stored on another type of storage medium than the actual data the consumer is interested in.

The media identifier is e.g. a code word or decryption key stored on a dedicated storage device, e.g. a smartcard, a printed electronic circuit (PEC) or a radio-frequency identification (RFID) tag. Preferably any type of passive storage device may be used, i.e. devices that have no power supply but receive their operating power through a combined power and communication interface from a player or decoder, and therefore have unlimited lifetime. Further, it is very difficult for ordinary users to copy them, while on the other hand they are cheap in production for the industry. A particular advantage of RFID tags is that corresponding readers are free of abrasion and can easily be integrated into consumer electronic devices, and that these readers are easy to handle since they only require the RFID tag to be somewhere in a nearby reception range, e.g. one meter, but not at a particular location like a dedicated drive.

In a preferred embodiment, the (e.g. copyright protected) data on the media carrier are encrypted, and the media identifier tag contains also the corresponding decryption key. Data fractions like the single pieces of content, e.g. songs or video scenes, or even the coded blocks, e.g. a frame or group-of-pictures (GOP) as used in MPEG for video coding, may be labelled with identifiers and thus require the corresponding media identifier to be available for decoding. In one embodiment, all data fractions use the same identifier value. In another embodiment they may use different identifier values. These identifier values may be retrievable from the same identifier tag or may e.g. be calculated from one or more start values retrievable from a single identifier tag.

When an identifier value is calculated from an initial identifier value, the required calculation may depend on a parameter or operation value that is also retrieved from the media identifier. E.g. the identifiers J of consecutive GOPs may be calculated as a sequence based on two initial identifiers J1 and J2, such as Jn = J1 + n*J2 in a simple case. This prevents usage of a simple analysis to detect the identifier value as the most frequent code sequence on a disc.

In another embodiment, the data fractions or the media carrier, e.g. disc, as a whole contains an identification code or individual identification codes, which are read by a pick-up and compared to an identification code or a plurality of identification codes received from the media identification device, e.g. RFID device or tag. When the identifier of the data fraction that is currently retrieved from the disc has a matching identifier received from the media identification device, decoding may start. Otherwise decoding is blocked or disturbed.

A more generalized view of the invention is to define a physical pair of '*asset*' and '*asset identifier*'. This model makes the copyright protected content even independent from its presentation form. In the present application, the term "media carrier" is used for a storage medium holding copyright protected data, and the term "asset" may be used for these data. Further, the terms "media identifier" and "asset identifier" are used interchangeably for a data set that is required for decoding said copyright protected data, and that is stored on a "media identifier tag" or "asset identifier tag".

To make this more clear consider the following example. Think of an identifier that is logically bound to the movie "Finding Nemo", which is stored on a DVD disc. That is, an identifier may be stored in the entry region of the disc or within the audio-visual (AV) data, once or more times. A consumer purchased the DVD with the movie together with the physically separated identifier, which is e.g. stored on an RFID tag. A DVD player or similar that is connected to, or contains, an RFID reader, and is therefore able to decode the DVD by means of the identifier stored on the RFID tag, may play the movie from the DVD, or transcode (re-encode) the movie from the format that is stored on the DVD (e.g. 6 Mbit/s MPEG2) into another format like 700 kbit/s DIVX5.1, for playback purpose on a mobile device. The transcoder includes however into the transcoded version of the movie the same identifier as in the original version, so that the mobile device needs access to the same RFID tag also for decoding the converted movie. Moreover, if the content is not encrypted, then any conventional device may generate a conventional copy of the DVD including the identifier, but since it is unable to access the media identifier it may not convert neither playback the movie. This allows the consumer free usage of the content, but prohibits illegal circulation.

Advantageously, the owner can duplicate the content several times by copying the media, without loosing the ability to decode it, while the content producer and/or author can be sure that the content is not copied and circulated illegally.

When the consumer uses conventional copy processes, the copies are still under control of the content provider. Only one of the copies can be used at a time, since only one media identifier tag is available. The invention includes also asset format conversion by keeping the copy protection active for copies converted to another format.

As a particular advantage, the user is not bothered with any special procedure required by copy protection. Instead, the user only has to handle the asset identifier, which is quite comfortable when using e.g. an RFID tag. In this case the user has to keep the RFID tag near the player device in a specified range common for RFID, e.g. 20 cm or 2 m. A very comfortable way to provide the media identifier is to attach it to the media jacket, i.e. the package in which the original storage medium is sold.

An apparatus for accessing first data retrieved from a first storage medium according to the invention may be part of e.g. a disc player or a personal computer (PC), and includes
first interface and receiving means for retrieving first data from a first storage medium, e.g. audio-visual data from a compact disc (CD), hard-disk drive (HDD), memory stick or the like, the first data containing first content identification data and first application data,
means, e.g. microprocessor, for extracting from the first content identification data a first content identifier value,
second interface and receiving means for providing power to a passive device containing a second storage medium, and for receiving first key identification data from the second storage medium on said device, e.g. a code word is received from an RFID tag via an air interface,
means for extracting a first key identifier value from said first key identification data, e.g. a microprocessor or demultiplexer,
compare means, e.g. microprocessor or comparator, for comparing the extracted first content identifier value and first key identifier value, and for generating an indication signal if the values are equal, and processing means, e.g. microprocessor or decoder, for processing the first application data received from the first storage medium, wherein the processing means is enabled upon said indication and disabled otherwise.

If the processing means is enabled, it may properly process the application data, while otherwise it may process the application data only improperly or not at all.

Further, if the first application data is encrypted and the first key identification data further contains a decryption key, the means for extracting the first key identifier value may also extract the decryption key and provide it to the processing means for decrypting or decoding the first application data.

Further, the apparatus according to the invention may further include
means for storing the first key identifier value, e.g. a memory, wherein the stored key identifier value is after retrieval used by the compare means to be compared with the first content identifier value,
means for measuring time and for indicating that a predetermined time after storage of the first key identifier value has elapsed, e.g. a loadable download counter with zero detector, and
means for deleting the stored key identifier value upon said indication that a predetermined time after storage of the first key identifier value has elapsed. E.g. a microprocessor may explicitly delete the stored value, or overwrite it with the latest received value from the second storage medium, to ensure that the second storage medium is still accessible.

Advantageous embodiments of the invention are disclosed in the dependent claims, the following description and the figures.

### Brief description of the drawings

Exemplary embodiments of the invention are described with reference to the accompanying drawings, which show in
Fig.1 integration of a media identifier in a media carrier jacket;
Fig.2 the structure of a player having access to a media carrier and a media identifier;
Fig.3 a flowchart of the inventive method for enabling a decoder with an identifier received from an RFID tag;
Fig.4 the structure of a player having access to a media carrier and a media identifier and having re-encoder for mobile player integrated;
Fig.5 a separate decoder in an adapter box reading encoded AV data from a conventional player and identification data from a media identifier; and
Fig.6 a decoder in a player that can be enabled by an identifier received from an authorization box.

### Detailed description of the invention

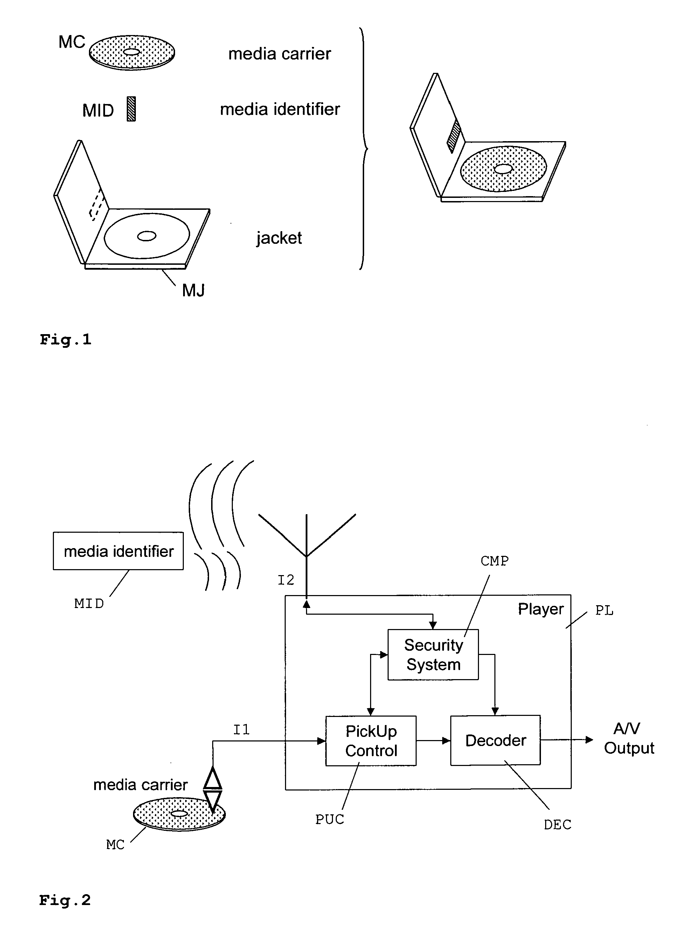

Fig.1 shows exemplarily how a media identifier MID is integrated within the box or jacket MJ for the media carrier MC. According to the present invention, the media carrier MC holding the asset, e.g. audio-visual data like a movie or music, is physically separated from the media identification MID, which is a key to the right to use or consume the identified asset. In other words, a first data object stored on a first storage device MC may only be decoded, decrypted or transcoded while a second data object from a second storage device MID is readable. The second storage device MID may be physically attached to the first storage device MC or its package MJ. In Fig.1, showing a preferred embodiment, the media identifier MID is e.g. a passive radio-frequency identification (RFID) tag that is attached to the jacket MJ of the corresponding DVD. This is particularly advantageous since consumers often keep the jacket of at least the currently read disc near the player. The media identifier MID can also be a separate item laid in the media jacket, so that it can be taken out and placed near the player when the disc is read. The consumer may then take the jacket away from the player, e.g. for taking out the booklet.

In one embodiment of the invention, the media identifier MID contains a decryption key, or part of a decryption key, for the encrypted data on the media carrier MC. A device using the asset/asset identifier pair may be implemented as a decoding box, which could be within a player, a mobile device with a display, a PC, a network server, a set-top box etc. The decoding box checks the asset identifier connected to it and starts the decoding of the asset if the identifier grants the appropriate rights. Otherwise, access to the asset is preferably refused, or at least strongly restricted to an unacceptably low quality.

The media identifier or asset identifier may also be a printed electronic circuit (PEC) that uses a special ink, as developed e.g. by Xerox Corp. Like an RFID tag, it is cheap in production, easy to integrate into a disc jacket and very difficult to copy for the average consumer, since it is not commonly available as a writable medium. Such media identifier may be in stock in a shop, or generated when a customer buys a media carrier.

As an advantage of separating the asset identifier and the media carrier, the latter can be produced conventionally. Any separate processing step for the media carrier, like e.g. writing a burst cutting area on DVD-ROM, is omitted.

In case of using an air interface, such as RFID, the user does not even need to make the media identifier known to the decoder box. As depicted in Fig.2, the decoder box e.g. in a player checks the availability of the media identifier autonomously on its own by sending radio frequency (RF) signals, thus providing the RFID tag with power, and reading the RF answering signal from the RFID tag. The answering signal contains a code that can be used either to be compared with an identification code read from the disc, so that the decoder can be enabled if the two codes match or disabled otherwise, or it can be used as the actual decryption key that the decoder utilizes. Well-known techniques are available to pick out and communicate with a single RFID tag in the case that more than one RFID tag is in the reception range. Decoding devices according to the invention may also provide a dedicated location where the currently used asset identifier must be placed, e.g. a drive, a compartment or the like.

If the media identifier embedded within the jacket of the media carrier is separately removable, this allows the owner to carry it around together with a copy of the original disc, which is advantageous for safety, i.e. to take care for the original disc, or for re-arrangement or conversion purposes. The user may also use the jacket of the original media carrier, with attached media identifier, for a copied disc.

The data on the media carrier have a logical layer associated with the media identifier around them to lock or encrypt the contents. The logical layer can cover the whole volume or single parts on the media separately, e.g. single songs on a CD or single video clips on a DVD. It is also possible to prohibit decoding by an additional encryption layer around the assets. For decoding the asset identifier is required.

In one embodiment, the contents of the media carrier can be decoded in strongly reduced quality without the media identifier, but for full-quality decoding the media identifier is required.

A further aspect of the invention is the granting of re-arrangement and conversion of assets. It might be desirable for a user to store at his home all audio CDs on a single server. On the other hand, a content creator may tolerate this as long as no uncontrolled circulation is possible. This is assured however by using a media identifier, e.g. an RFID tag located near the server.

When the media identifier is not reachable, e.g. a legal or illegal copy of the audio CD is used in a car's CD player, the decoding is prohibited. If the copy is legal, the user has the respective media identifier and needs to make it accessible to the car's player. E.g. if the user has the RFID identifier tag in his pocket, it may be within the detection range of the player. At this time however the user's family may not play the original CD at home, because they don't have the identifier tag. The same applies to all other copies. Thus, the content provider can be sure that uncontrolled circulation of the contents is not possible.

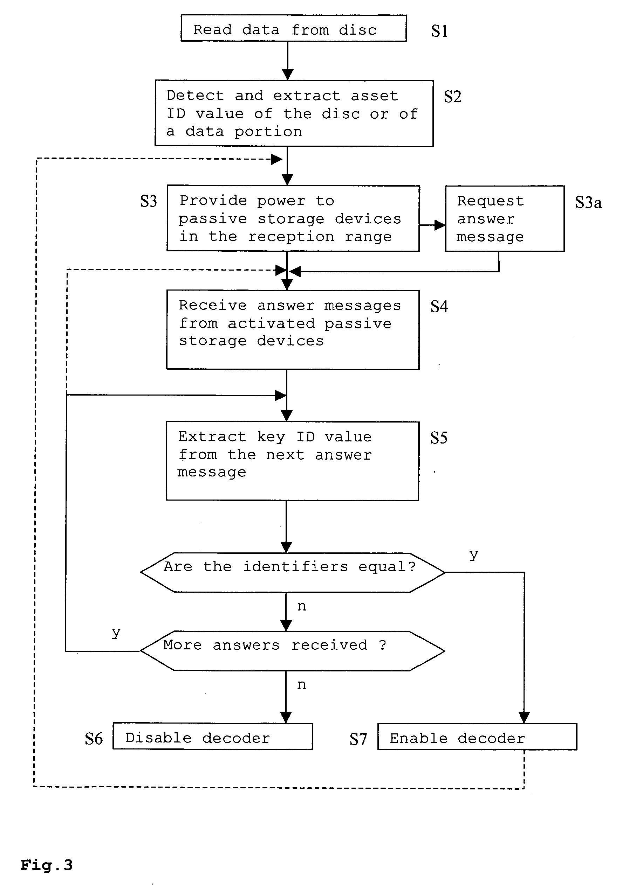

Fig.3 shows a flowchart the inventive method, which is used for enabling a decoder with an identifier received from an RFID tag. In the first step S1 data are read from a disc. In the next step S2, the read data are analysed and an asset ID value is detected and extracted. The ID value is attached to (preferably included in) the application data, e.g. in dedicated packets or in packet headers, so that the identifier data cannot be dissociated from the application data to be protected. The ID value can also be included in the introductory part of the disc, so that it can easily be found after the disc is inserted into the player. In the next step S3, the player provides over a dedicated interface power to a passive read-only storage device, e.g. generates an electromagnetic field to empower an RFID tag or activates a smart card. Depending on the type of storage device, the player may have to request in a separate step S3a data from the device, e.g. from a smartcard, while other devices initially send out data when they are empowered. From the storage device an answer message is received S4, and an ID value is extracted S5. If more than one storage device answers simultaneously, there are usually mechanisms known to differ between the individual answer messages, e.g. RFID tags answer after individual, statistically modified delays. In this case, the previous steps S4, S5 are executed several times, once for each received answer message.

After the ID value has been extracted from the current answer message, it is compared with the ID value that was previously read and extracted from the disc S1,S2. If both are equal, or more generally if the values match according to a predefined rule, the decoder is enabled S7, e.g. an MPEG video decoder or an additional descrambler. Otherwise the next answer message is analysed. If all answer messages were analysed and no value matching the disc ID value was received, the decoder remains disabled S6.

In one embodiment of the invention the described procedure is repeated later, while decoding or presenting the application data. E.g. few seconds after the decoder was enabled S7, the storage device holding the media identifier is empowered again S3, and the identifier value needs to be transmitted again.

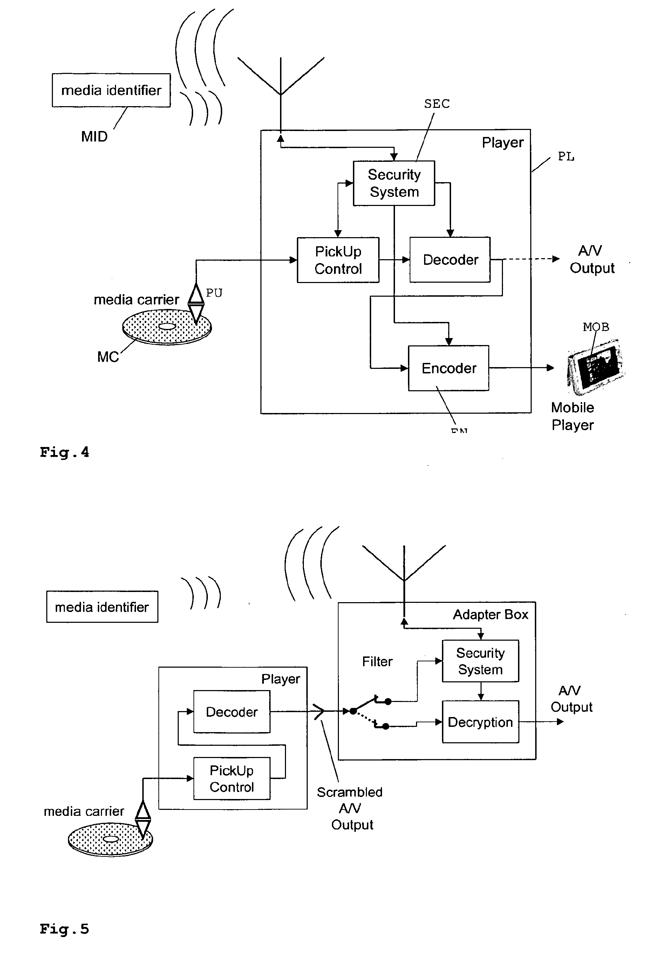

In one embodiment of the invention it is possible to convert the format of assets when the media identifier is accessible. A corresponding apparatus is depicted in Fig.4. The data from a disc, e.g. a DVD video, may be converted to enable storage and playback from a mobile device, e.g. a THOMSON Lyra portable player. For this purpose, a pickup PU reads data from a media carrier MC, and a control unit detects that in these data identifier data are included and requests a security system unit SEC to check the identifier data. The security system unit checks if a media identifier MID is accessible, e.g. if an RFID tag is within the detection range. Then the security system retrieves a media identifier value from the media identifier MID as described above, and compares the received value with the identifier data from the disc. If they are equal, the security system block SEC enables a decoder block that may now start to decode the data.

Simultaneously, the security block SEC enables an encoder block EN, which may receive input data from the decoder block or directly from the pick-up, depending on the type of conversion. The encoder block now starts to re-encode the retrieved data, except the identifier, which remains unchanged. Before outputting the re-encoded data, the encoder adds the identifier value again, e.g. as an additional layer or as additional packets, so that also the copy may not be decoded without having the media identifier MID available. When the copied data are stored on a mobile device, the user who wants to listen or watch them needs to carry the media identifier tag with him.

The conversion may affect the bitrate as well as the coding format. E.g. PCM encoded audio can be converted to mp3Pro, or MPEG-2 encoded video at 6 Mbit/s to AVI encoded video at 400 kbit/s. The conversion product is decodable only by means of the asset identifier. Therefore uncontrolled circulation and changes within the format are prevented. The asset identifier may also rule the detail aspects of the conversion. E.g. it may be allowed to separately copy single tracks of an audio CD, but prohibited to cut out parts of a single track, or it may be allowed to separate a chapter of a DVD movie but not to separate only its audio track. E.g. it is possible to obstruct the copying of parts out of a single audio track, or the copying of only the audio track out of a movie chapter, by adding a mandatory immediate re-encoding step after decoding, because in this case the first decoding process, the re-encoding process and a later decoding process need the media identifier for extracting or generating the encryption key.

For re-encoding it is advantageous to use a symmetric encryption method, i.e. encoding and decoding are processed by means of the same key. This key may either be read from the media identifier directly or - in a more secure method - be generated by a processing step using the media identifier value as a seeding point for key generation.

Another embodiment of the invention is an adapter set-top box for allowing the usage of asset identifier protected assets with players that do not have this protection model integrated. This can be reached by a further conversion that is cascaded after the decoding, as depicted in Fig.5. The decoding is divided into two parts and executed within two separate devices or instruments. The first instrument is a standard state-of-the-art decoder, which needs not to know or handle asset identifiers. Its output may be digital or analogue. The second instrument is e.g. a set-top box that performs the adaptation for the asset identification. It may have a digital or analogue input interface, depending on the type of player it is intended to work with. If the input interface is analogue, a conversion of the data to digital format (ADC) may be required.

The two instruments may work together as described in the following: The content on the media carrier, e.g. any type of optical disc, has a wrapping encryption, i.e. additional logical layer, as mentioned above. This layer is however ignored by a conventional decoder, but the quality of the decoding result is annoyingly scrambled. E.g. a video becomes unacceptable because of line or block scrambling, or by rapidly flipping whole pictures. Only the second instrument may effect a correct de-scrambling. This is reached by reading the media identification value from the media identifier, e.g. RFID tag, and reading another identifier embedded within the data from the player. In the case of an analogue signal the data may be embedded e.g. in teletext lines or in very high or very low analogue audio signals, and in the case of a digital signal it can be some private packages within the stream, or watermarks for signalling purposes. By means of both information types, the matching of asset and asset identifier can be checked and de-scrambling can be executed or rejected.

The inventive method allows flexible application models. If e.g. more than one asset identifier (RFID, PEC, etc.) comes with the asset, this allows more than one copy to be consumed simultaneously, e.g. one in the living room and one in the car, or it allows different types of playback devices, namely RFID enabled or PEC enabled devices.

Further, it is possible to sell asset identifiers separately, in order to make assets that are already distributed available to the user. For advertising purpose, parts of the contents of a media carrier, e.g. a single song on a CD, may be decodable without accessing the media identifier.

When the inventive method is used for a built-in drive in a personal computer (PC), the asset identifier may preferably be checked by the built-in drive itself. This procedure requires no ID carrying traffic in and/or out of the PC and is thus more secure, because cracking the identifier code becomes much more difficult.

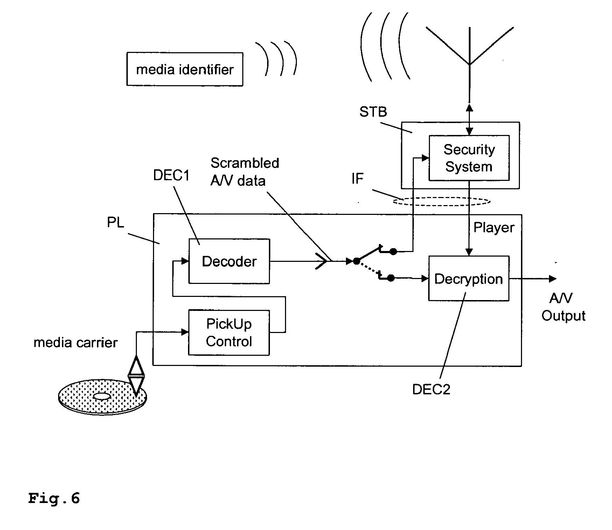

It is however possible though less secure to use a separate device, e.g. a PC slot card, only for enabling the decoder of a player, as shown in Fig.6. A first decoder DEC1 in the player PL works equally on all retrieved data, and a second decoder DEC2 may operate in two different modes. In a first mode it works according to a first algorithm, and in the second mode it works according to a second algorithm. Content protected data may be additionally or differently scrambled or encrypted according to the second algorithm, while other data are encoded according the first algorithm. Switching the decoder into the second mode is only possible by the device STB via an interface IF. The device STB reads first identification data via the interface IF and second identification data e.g. from a PEC, compares them and when they match it provides via the interface IF the enable signal for switching the second decoder DEC2 into the second mode.

Further, the following embodiments may be advantageous.

In one embodiment, different media identifier tags control the playback in different manners, e.g. one for parental view and one for children view.

In one embodiment, the media identifier tag contains a specific country code, which must match the country code of the player to enable decoding.

In one embodiment, different level media identifier tags are provided for different content quality, e.g. one for standard definition (SD) video and another for high definition (HD) video.

In a further embodiment, the asset can be viewed upon as a container or database, and separate media identifiers are available to enable playback of certain items from the container.

In one embodiment, the key identification data retrieved from the second storage medium further comprise a value that can be used as operation value or operation identifier that modifies the algorithm of the decoder or descrambler.

E.g. the decoder may have different predefined operating modes, and the operation value switches it to the currently required mode. The decoder, being enabled as described above, may also execute a mathematical operation in which the operation value retrieved from the key identification data serves as an operand. Particularly, also the algorithm that is used for calculating a second key identification value from the first key identification value, as described before, may be modified or determined by the operation value.

In one embodiment, the communication between media identifier and decoder box can be encrypted itself, so that the key stored on the RFID is not freely readable. This can be achieved e.g. through session encryption, wherein a secret session key is transmitted to the RFID tag, where it is used to encrypt the encryption key itself during transmission. For this purpose the media identifier tag may need some computing ability.

In one embodiment, the player stores the media identifier value and/or decryption key for some time, e.g. ten seconds, two hours or twelve hours, so that it remains enabled for the corresponding asset even if the media identifier is not currently accessible. The time may be fixed as a standard time, or it may be stored on the media identifier tag and downloaded to the player together with the media identifier value, so that individual times for different assets are possible. After the time is elapsed, the stored values are automatically deleted or overwritten. If the time is short, e.g. few seconds, then the amount of electromagnetic radiation for communication with the media identifier, and thus e.g. power consumption of the player, is reduced. If the time is in the range of a typical audio CD duration or above, it would be possible e.g. to enable a portable CD player before leaving home, so that the media identifier tag needs not be carried around. In this case it would be advantageous if the player, i.e. the security system within the player, is able to store a number of different media identifier values relating to several CDs, so that the user may listen to different albums within the respectively allowed time frame.

In one embodiment of the invention, the media identifier is only necessary to start the decoding, and can be taken away once the decoding has started. In another embodiment the availability of the media identifier is regularly checked, e.g. every few milliseconds or seconds, and decoding is stopped when the media identifier is not readable. In a further embodiment, the media identifier must be constantly readable.

In principle it is also possible for a single media identifier tag to store multiple different identifier values for different assets, even for different media. E.g. a media identifier tag may contain an additional identifier that enables decoding of data that can be downloaded from the Internet, such as bonus tracks or the like. It is also possible to produce a media identifier tag that contains identifier values and/or decryption keys for two or more media, e.g. for a particular set of DVDs. In this case, the security system in the player compares the different received identifier values with the identifier value of the currently inserted DVD, as explained above for the case of multiple media identifier tags being readable, and selects the matching identifier.

The inventive method is also usable for content data stored on other storage media than discs, e.g. MP3 encoded music stored in the memory of a portable MP3 player. In this case, every song should have its own identifier.

The invention can also be used when holding the content on a central server, e.g. within a home network. The server could use e.g. an RFID detector that checks for the media identifier before starting to deliver the content to any device connected to the home network.

## Claims

1. A method for accessing first data retrieved from a first storage medium (MC), **characterized in** the steps of
- retrieving through a first interface (I1) first data from the first storage medium (MC), the first data containing first content identification data and first application data;
- providing through a second interface (I2) power to a removable passive device, the device containing a second storage medium (MID);
- receiving through the second interface (I2) first key identification data from the second storage medium (MID) on the removable device;
- comparing (CMP) first content identification data and first key identification data, and generating an indication if both are equal; and
- upon said indication enabling further processing (DEC) of the first application data, or disabling further processing of the first application data otherwise.

2. Method according to claim 1, wherein the first application data is encrypted or encoded, and wherein the first key identification data received through the second interface (12) further comprises a data decryption key, further including the steps of
- extracting the decryption key from the first key identification data; and
- utilizing the decryption key to decrypt or decode (DEC) the first application data.

3. Method according to claim 1, wherein the further processing (DEC) comprises re-encoding, further including the step of
- attaching or including the first content identification data or first key identification data to the re-encoded first application data; and
- providing the re-encoded first application data together with the attached identification data to an interface for storage or presentation.

4. Method according to claim 3, wherein the first application data is encrypted or encoded, and wherein the first key identification data received through the second interface (I2) further contains an encryption key, further including the steps of
- extracting the encryption key from the first key identification data; and
- encrypting or re-encoding the first application data before attaching said identification data, wherein the extracted encryption key is used for said encrypting or re-encoding, and wherein the resulting data can be decrypted using said decryption key.

5. Method according to any of the preceding claims, further including the steps of
- storing the first key identification data, and retrieving the stored key identification data for the step of comparing content identification data and key identification data;
- deleting the stored key identification data after a predetermined time.

6. Method according to any of the preceding claims, further comprising the steps of
- retrieving second data containing second application data and second content identification data from the first storage medium (MC);
- calculating a second key identification value from the first key identification value using a predefined algorithm;
- comparing the second content identification data and the second key identification data, and generating an indication if both are equal; and
- upon said indication enabling further processing (DEC) of the second application data, or disabling further processing of the second application data otherwise.

7. Method according to the preceding claim, wherein the second identification data retrieved from the second storage medium (MID) further comprises an operation value, and wherein the algorithm that is used for the step of calculating a second key identification value from the first key identification value is modified or determined by the operation value.

8. Method according to any of the preceding claims, wherein after disabling the further processing of the first application data second data containing second application data and second content identification data are retrieved from the first storage medium (MC), and wherein the second content identification data is compared with the key identification data and upon both being equal, processing of the second application data instead of the first application data is enabled.

9. Method according to any of the preceding claims, wherein the second storage medium (MID) is a read-only medium and accessible through a wireless interface.

10. Method according to the preceding claim, wherein the second storage medium (MID) is an RFID tag, or radio-frequency identification device.

11. Apparatus for accessing first data retrieved from a first storage medium (MC), the apparatus including
- first interface (I1) and receiving means (PUC) for retrieving first data from a first storage medium (MC), the first data containing first content identification data and first application data;
- means for extracting a first content identifier value from said first content identification data;
- second interface (I2) and receiving means for providing power to a passive device, wherein the passive device contains a second storage medium (MID), and for receiving first key identification data from the second storage medium (MID) on said device;
- means for extracting a first key identifier value from said first key identification data;
- compare means (CMP) for comparing the extracted first content identifier value and first key identifier value, and for generating an indication if the values are equal; and
- processing means (DEC) for processing the first application data received from the first storage medium (MC), wherein the processing means (DEC) is enabled upon said indication and disabled otherwise.

12. Apparatus according to claim 11, wherein the first application data is encrypted and the first key identification data further contains a decryption key, and wherein the means for extracting the first key identifier value also extracts the decryption key, and wherein the decryption key is provided to the processing means (DEC) for decrypting or decoding the first application data.

13. Apparatus according to claim 11 or 12, further including
- means for storing the first key identifier value, wherein the compare means (CMP) compares the first content identifier value and the stored key identifier value;
- means for measuring time and for indicating that a predetermined time after storage of the first key identifier value has elapsed;
- means for deleting the stored key identifier value upon said indication that a predetermined time after storage of the first key identifier value has elapsed.
